# EUROPEAN PATENT APPLICATION

(11) **EP 1 919 157 A1**
(43) Date of publication of application: **07.05.2008**
(21) Application number: 06291740.6
(22) Date of filing: 06.11.2006
(51) Int. Cl.: H04L 29/06

(54) **Authentication based on a single message**

(71) Applicant: Axalto S.A., 92190 Meudon (FR)
(72) Inventor: Nachef, Armand, 92190 Meudon (FR)

(57) **Abstract**

The invention relates to a method for a server (S) to authenticate a user. The user is connected to the server (S) from a personal computer (PC) through an IP network (IPN). The user has a mobile phone (MP) equipped with a SIM (SIM). The SIM (SIM) comprises means for authenticating the user to a mobile network server (MNS) through the mobile phone (MP). The mobile network server (MNS) is connected to the server (S) through a network (N). For the purpose of authenticating the user to the server (S), a single message is exchanged with the SIM, the message being sent from the mobile network server (MNS) to the SIM (SIM), the message containing a session password.

## Description

The invention relates to an optimized method for a server to authenticate a user, the user connecting to the server from a personal computer. The invention also relates to a system implementing this method.

It has long been known in the art that for a server to authenticate a user connecting to it from a personal computer, it is possible to use a password. But using no more than a password is very weak, in particular because the password may be intercepted and replayed.

It is also known to rely on cryptographic material (e.g. a key specific to the user) stored inside the personal computer for authenticating the user. But this is very complex, in particular when the user connects to the server from a third party personal computer (e.g. from a friend's home, from a Cybercafé, etc.), or when the user connects for the first time to a previously unknown server. Indeed, the personal computer needs to be loaded with cryptographic material in a secure manner prior to the authentication, while this cryptographic material loading represents a challenge almost as complex as the authentication itself, if not more.

Therefore in a more elaborate known method, it has been proposed to authenticate the user through his SIM, since most people have a mobile phone with a SIM. This method implies that the server knows the mobile network operator of the user. This known method is more secure than the previous ones because it makes use of the authentication of the SIM by the user's mobile network operator, which is a strong authentication performed with tamper resistant devices. It also permits using a single password (e.g. the PIN code of the SIM) instead of remembering plenty of passwords (one per server or service provider).

This known method does not require loading any key material inside the personal computer, which is not necessarily a trusted environment.

This known method typically consists in the user sending an SMS (which may be empty) to a number provided by his mobile network operator, and in the mobile network operator serving this request by sending an SMS containing a username and a password to the user. The user receives the SMS through the mobile network, which is typically considered a trusted channel, since there is an authentication between the SIM and the mobile network server when the mobile phone is switched on or otherwise connected to the network. The user can then simply type the user name and password in the personal computer in order to be authenticated to the server. The password is preferably a one time password, i.e. it cannot be reused. Therefore a hacker spying this password will not be able to take advantage of it in the future.

In this known method, the server has to know the mobile network operator to which the user has subscribed, since the server needs to provide (or request) a username and a password to (or from) the operator in order to authenticate the user.

Many users are familiar with this method and tend to associate it with services with charge for admission (such as access to the operator hotspots). Therefore there is a risk of user reluctance. The user may wonder whether he's going to be charged simply for receiving the password or only if/when he connects using this password. The user may refuse to use this method even if the authentication service is free. Requiring the user to initiate a communication with the operator for authentication is typically perceived as an unfriendly method. The user may inadvertently delete and loose the SMS before copying the password.

In addition, this method is slow, in particular due to the fact that the delivery of a SMS may take a lot of time, therefore the authentication can be long. As the method requires two SMS, one has to wait both for the first SMS to be sent, and then again for the second SMS to be received.

This method also has other drawbacks. In particular a fake server may ask the end-user to dial a wrong number.

The method for a server to authenticate a user according to claim 1 overcomes the above problems. The method uses a single SMS. The event that triggers the first communication with a third party is the input of the password in the personal computer PC, therefore it is clear that nothing will be charged before.

The known method is also problematic because it makes the assumption that the mobile network is secure. While it is true that the authentication of the SIM to a mobile network server is very secure, it should be noted that SMS are typically sent in clear text, therefore anybody having the tools for spying radio communications on a mobile network could read the username and password sent to the SIM and use them faster than the legitimate user. There is no mutual authentication. There are some risks of Phishing.

The method for a server to authenticate a user according to claim 3 overcomes the above problem. The method secures the message with a cryptographic algorithm.

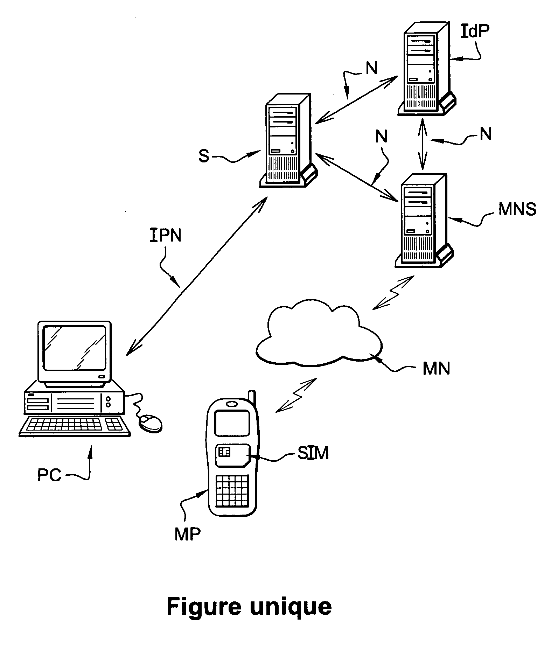

The invention and its advantages will be explained more in details in the following specification referring to the appended drawings, in which Figure 1 shows a possible architecture of a system for which a method according to the invention is advantageous.

In the method according to claim 1, the user is connected to the server S from a personal computer PC through an IP network IPN. In other words, both the personal computer PC and the server S understand IP, which is the acronym for Internet Protocol. The server S may be a web server proposing services to the user, for example online hotel booking, flight reservation, purchase of goods, access to private areas such as a repository of pictures stored by the user on the web server, etc.

As known in the art, IP may be encapsulated in different types of underlying protocols (WiFi, Ethernet, ADSL, etc.) therefore there may be multiple underlying protocols between the personal computer PC and the server S. For example the personal computer PC may be connected to a USB WiFi card (USB is the underlying protocol between the personal computer PC and the USB WiFi card) which communicates with a WiFi access point using a WiFi protocol. The WiFi access point may be connected to a home router through an Ethernet connection, the home router being connected to an internet service provider (ISP) server through a cable or ADSL connection, the ISP server establishing a connection with the server S through a number of routers and underlying protocols such as satellite and optical fiber protocols.

The personal computer PC may be a desktop computer, a laptop computer, a PDA, etc. The personal computer PC may belong to the user or to a third party. For example, assuming the user is a student, the personal computer PC can be:
- a desktop computer of the student's parents, connected via ADSL in the family's home
- a Windows laptop belonging to the student, connected to a WiFi hotspot of the university
- a UNIX terminal of the university
- a WiFi smart phone belonging to a friend of the student
- a Cybercafé computer connected to the Internet via a cable connection
- etc.

The user has a mobile phone MP equipped with a SIM. The mobile phone MP may be a cell phone such as a GSM/GPRS/UMTS cell phone, a PDA with mobile telephony capability, etc. All GSM mobile phones now support elementary SIM toolkit commands such as "Display Text" and "Get Inkey" and SIM toolkit SMS envelopes. Therefore almost any mobile phone works with the invention.

SIM stands for Subscriber Identity Module. A SIM is a device which comprises means for authenticating a user to a mobile network server MNS through a mobile phone MP. A SIM typically consists of a smart card, however other form factors are possible (MMC cards, device with USB connector, etc.). The acronym SIM is taken in a broad meaning, i.e. USIM and RUIM cards are examples of SIMs given the above definition.

The user is typically a subscriber of a mobile network operator, i.e. this mobile network operator charges the user for his communications. The SIM is normally provided to the user by this mobile network operator.

The mobile network server MNS is a server which typically belongs to this mobile network operator. The mobile network server MNS may consist of a single hardware server, or of several hardware servers (either similar redundant servers, or different servers, or different sets of similar redundant servers) which are interconnected. Several servers of the mobile network server MNS may be either in the same room or in different locations (e.g. different countries). The mobile network server MNS may comprise several software servers, all of them running either on a single hardware server, or on separate hardware servers which are interconnected.

The server S is connected to the mobile network server MNS through a network N (for example an IP network). Therefore, the mobile network server MNS and the server S may communicate. For example the successful verification of the session password by the SIM can be notified by the mobile network server MNS to the server S. The mobile network server MNS and the server S normally authenticate each other with known techniques prior to communicating one with the other.

According to the invention, the method should have the following characteristic. For the purpose of authenticating the user to the server S, a single message is exchanged with the SIM, the message being sent from the mobile network server MNS to the SIM, the message containing a session password.

For example, the user may type his phone number in the browser of the personal computer PC, together with a session password. The session password is preferably generated by the SIM but could also be chosen by the user (e.g. random choice by the user). Having the SIM generate the session password is in general faster. Indeed the session password only needs to be typed once in the personal computer, instead of both in the personal computer and the mobile phone (which may also increase the risk of errors by mistyping). In general having the SIM generate the session password is also more secure, in particular considering the fact that the SIM card can generate a truly random number. This contrasts with the input of the user which can be recorded and analyzed by a hacker, and which may turn out to be predictable (e.g. the user may be typing his birth date followed by an incremental index, or may even always type the same session password).

Preferably, the session password is not be generated by the personal computer PC, which by hypothesis is not trusted. Preferably, the session password is not displayed to the user solely by the personal computer PC (for the same reason). Indeed, a hacker could replace the real session password by another session password that he's using in parallel for another (illegitimate) connection. The user could be tricked into typing this fake password in his mobile phone, thereby authenticating the hacker. The hacker would simply need to know the user's mobile phone (which is often public in yellow pages) and to have control over the personal computer (in order to display the hacker's session password).

In the context of the invention it is in general not recommended to generate the session password on the server or on the mobile network server. Indeed, in such cases the password should either be transmitted to the PC, which is not secure (as seen above), or to the SIM, which would consume one more message.

The message may be in particular an SMS.

In an improved version of the above method, the message is secured with a cryptographic algorithm.

In particular, when the message is an SMS, it may be encrypted and/or signed according to the ETSI 03.48 standard.

However, the ETSI 03.48 standard has been implemented by most mobile network servers MNS in such a manner that it is typically not possible for a mobile network server MNS belonging to one operator to encrypt an SMS on behalf of another operator. Indeed, operators typically do not share their cryptographic keys, while the method typically requires that the SIM and the mobile network server MNS share some keys for the purpose of transmitting an encrypted SMS.

Therefore, while this improved version is more secure, it can typically only work with the operator of the user. In case the user is roaming (e.g. the user may be on business trip in a remote country), the user does not connect to his own mobile network operator, but to a partner operator, which in general does not know the keys of the SIM, therefore the authentication method typically does not work, and should either fall back on a clear text SMS, or refuse to authenticate the user (if the clear text SMS is not acceptable from a security standpoint).

The above methods can be further improved by allowing many servers S to rely on the authentication provided by the method, and by allowing many mobile network servers MNS to provide an authentication method as described above. To this end, an identity Provider server IdP receive authentication requests from the server(s) S and dispatches the requests to the relevant mobile network server MNS.

identity Providers are defined in a consortium known as Liberty Alliance. Liberty Alliance (a.k.a Project Liberty) has developed suites of specifications defining federated identity management and web services communication protocols. The initial Project Liberty specifications were for Federated Single sign-on based on SAML. An Identity Provider server IdP may be used to authenticate a user for multiple service providers.

The mobile network server MNS may comprise in particular an OTA (OverTheAir) server. It is also possible to include an Identity Provider server IdP in the mobile network server MNS, in which case this mobile network server MNS may act as an identity Provider for other mobile network servers (e.g. mobile network servers from other network operators).

In the above described methods, the mobile phone MP may act as a "pass-through", in the sense that it does not need to participate in the authentication protocol other than by sending and receiving data on behalf of other entities, in a standard manner. Consequently, there is no need to install specific software on the mobile phone MP for the invention to work. In other words, the invention may work with almost any mobile phone MP without modification, for example it may work with all GSM mobile phones, which all support basic SIM toolkit commands (to the knowledge of the applicant).

In a first preferred embodiment of the method, the method comprises the following steps:
a. the user being connected to the server S from the personal computer PC, the server S requests a mobile phone number and a session password from the user,
   For example, the user may be in a Cybercafé, and may be connected to a web site hosted by the server S. The web site may provide services such as online book purchase. The user may have connected by typing the URL of the web site into the web browser of a personal computer PC of the Cybercafé (or by clicking on a link pointing to the web site from a web page). In another example, the server S may be an Internet Service Provider server (e.g. WiFi hotspot), access to Internet being granted only after authentication of the user. Before granting access to the services offered by the server S, a web page may display a text prompting for a mobile phone number and a session password, and a text box for typing the mobile phone number and the session password. The displayed text may instruct the user to select an applet on the SIM. The mobile phone number is typically the MSISDN associated with the SIM.
b. upon user request, the mobile phone MP instructs the SIM to generate a session password,
   This step may for example consist in the user selecting an applet on the SIM, via the mobile phone MP. This is typically achieved by triggering the applet with a "Menu Selection" envelope (which typically happens when the user selects the applet in a menu displayed on the screen of the mobile phone MP). The applet typically has a Toolkit Applet Reference (TAR) and it can be triggered by the reception of a 03.48-formatted SMS targeting its TAR. Such SMS data should preferably be signed and/or encrypted, preferably at least by the operator, using respectively the Kid and Kic OTA keys.
c. the SIM generates a session password,
   This may be done, for example, by the above applet installed in the SIM. The applet may be Simtoolkit Javacard applet. Such applet typically does not require any softmask in the SIM. Before generating the session password, the applet may require the user to enter a PIN code for increased security. This may be either the PIN code of the SIM (most SIMs have a PIN code, which can sometimes be deactivated), or a specific PIN code just for the applet (which may be convenient e.g. in order to have a PIN even when the user deactivates the PIN of the SIM or shares the PIN of the SIM with family members). Alternatively, the PIN may be required at a later stage (e.g. before displaying it), but it is preferred to check it as early as possible in order to defeat any attack as early as possible.
d. the SIM instructs the mobile phone MP to display the session password,
   For example the applet may display the session password on the screen of the mobile phone MP with a SIM toolkit command. The applet may also display a text asking the user to enter the displayed session password in the browser of the personal computer PC.
e. the user types his mobile phone number and the session password into the personal computer PC,
f. the personal computer PC sends the mobile phone number and the session password to the server S,
g. the server S sends the mobile phone number and the session password to the mobile network server MNS,
   If there are several possible mobile network servers, this step is typically achieved thanks to an Identity Provider server IdP serving as an entry point for all mobile network operators. The identity Provider server IdP may be in one mobile network server MNS. It may also be external to all mobile network servers MNS and communicate with all of them. The session password and mobile phone number are typically received by an OTA server integrated in the mobile network server MNS.
h. the mobile network server MNS builds an SMS containing the session password and sends the SMS to the SIM, the SIM being identified by its mobile phone number,
   In general, this is achieved by an OTA server integrated in the mobile network server. The OTA server may encapsulate the session password in a 03.48-formatted message. It may then provide this message with the TAR included in the applet AID. The OTA server may also sign and/or encrypt the data in the formatted message, with Kid and Kic as specified in the ETSI 03.48 standard. The OTA server may then send the formatted message to the mobile phone MP containing the SIM, identified thanks to the MSISDN number received from the server S.
i. the SIM receives the SMS,
j. the SIM verifies that the session password received in the SMS is identical to the one it generated in the first place,
   This possible without user intervention. Indeed, the applet of the SIM may be automatically selected thanks to the SMS received from the mobile network server MNS. For example the mobile phone MP may receive the formatted message and forward it to the SIM card in an envelope command with a technique specified in ETSI 11.14.
k. the SIM uses the SMS deliver report mechanism in order to inform the mobile network server MNS of the success or failure of the session password verification.
   An SMS sent by a server such as an OTA server or SMSC may typically be followed by status information returned to this server and informing it that the SMS was properly delivered. Step k makes use of this status information in order to avoid sending an additional SMS. This trick is made possible because the applet involves no pro-active commands (such as display of information or input of keys) between the reception of the SMS and the time when the status regarding the SMS shall be returned. If the applet determines that the session password received from the mobile network server MNS is the same as the one it generated, it may send a SW1_RP_ACK to the mobile phone MP through the post(statusByte) method of EnvelopeResponseHandler. Otherwise, it may send SW1_RP_ERROR to the mobile phone MP. The SW1_RP_ACK or SW1_RP_ERROR may be encrypted and/or signed, which may not only prevent tampering but also provide a mutual authentication.
l. the mobile network server MNS informs the server S of the successful authentication,
   For example an OTA server inside the mobile network server MNS may receive RP-ACK or RP-ERROR from the SIM. It may then inform the server S of the authentication success in case RP-ACK was received, otherwise it may inform the server S of the authentication failure.

Step e occurs after step a, and steps b to I occur consecutively in the above mentioned order.

In a second, less preferred embodiment of the method, the method comprises the steps as recited in claim 7, which are in part similar to the steps of the first preferred embodiment above. For similar steps, the above comments for the steps of the first preferred embodiment apply.

In step b, the user types a session password of his choice into the mobile phone MP. This is typically done by selecting an applet of the SIM which prompts the user for a session password.

In step c, the SIM stores the session password typed into the mobile phone MP. Typically this is achieved by the above applet which stores the session password (e.g. in RAM, which is typically the fastest method). The applet later compares the session password with the session password received in the SMS.

The remaining differences are self explanatory.

Step c occurs after step b, step h occurs after step c, step d occurs after step a, and steps d to k occur consecutively in the above mentioned order. In a preferred embodiment, step d occurs after step b, i.e. the user types the session password in the personal computer PC after typing it in the mobile phone, as it is the easiest way to guarantee that the session password will be stored by the applet before the SMS sent by the mobile network server MNS is received. If the user behavior does not respect this condition, the method of the second embodiment is likely to fail in many systems, because it is typically not possible to have a proactive command (for typing the session password) between the reception of the message and the status.

This second embodiment is not as foolproof as the first one. It may also present deficiencies already mentioned above, linked in particular to poor passwords being typed by the user instead of good passwords comprising random information being generated by the SIM.

However this second embodiment may be preferred in situations where the users are well aware of the importance of strong passwords and know very well how to use the method, as it may be psychologically important for the user to define the session password himself. The user types a password which he defines himself, both on the mobile phone MP and on the personal computer PC for later comparison.

It should be noted that the methods according to the invention may be susceptible to attacks by programs known as "spam bots", which may overload the mobile network server MNS (in particular components such as the OTA server and SMS-C which can constitute parts of the mobile network server in a GSM environment) with requests containing wrong phone numbers. In order to defeat such attacks, it is possible to use a technique known as CAPTCHA. According to Wikipedia, CAPTCHA stands for "Completely Automated Public Turing test to tell Computers and Humans Apart", and is a Carnegie Mellon University trademark. It is a type of challenge-response test used in computing to determine whether or not the user is human. A common type of CAPTCHA requires that the user type the letters of a distorted image, sometimes with the addition of an obscured sequence of letters or digits that appears on the screen. This type of CAPTCHA may be implemented just before the user submits his phone number.

In preferred embodiments, the above methods concern a mobile network MN consisting of GSM, GPRS and/or UMTS networks.

The invention also relates to a system comprising a SIM, a mobile phone MP, a mobile network server MNS, a server S and a personal computer PC, the system being characterized in that it is set to authenticate a user holding the SIM to the server S according to one of the above described methods.

## Claims

1. Method for a server (S) to authenticate a user, the user being connected to the server (S) from a personal computer (PC) through an IP network (IPN), the user having a mobile phone (MP) equipped with a SIM (SIM), the SIM (SIM) comprising means for authenticating the user to a mobile network server (MNS) through the mobile phone (MP), the mobile network server (MNS) being connected to the server (S) through a network (N), the method being **characterized in that** for the purpose of authenticating the user to the server (S), a single message is exchanged with the SIM, the message being sent from the mobile network server (MNS) to the SIM (SIM), the message containing a session password.

2. Method according to claim 1, wherein the message is an SMS.

3. Method according to claim 1, wherein the message is secured with a cryptographic algorithm.

4. Method according to claim 1 and 2, wherein the SMS is encrypted and/or signed according to the ETSI 03.48 standard.

5. Method according to any previous claim, wherein an identity Provider server (IdP) receive authentication requests from the server (S) and dispatches the requests to the relevant mobile network server (MNS).

6. Method according to any previous claim, wherein the method comprises the following steps:
a. the user being connected to the server (S) from the personal computer (PC), the server (S) requests a mobile phone number and a session password from the user,
b. upon user request, the mobile phone (MP) instructs the SIM (SIM) to generate a session password,
c. the SIM (SIM) generates a session password,
d. the SIM (SIM) instructs the mobile phone (MP) to display the session password,
e. the user types his mobile phone number and the session password into the personal computer (PC),
f. the personal computer (PC) sends the mobile phone number and the session password to the server (S),
g. the server (S) sends the mobile phone number and the session password to the mobile network server (MNS),
h. the mobile network server (MNS) builds an SMS containing the session password and sends the SMS to the SIM (SIM), the SIM (SIM) being identified by its mobile phone number, '
i. the SIM (SIM) receives the SMS,
j. the SIM (SIM) verifies that the session password received in the SMS is identical to the one it generated in the first place,
k. the SIM (SIM) uses the SMS deliver report mechanism in order to inform the mobile network server (MNS) of the success or failure of the session password verification.
l. the mobile network server (MNS) informs the server (S) of the successful authentication,
wherein step e occurs after step a, and wherein steps b to I occur consecutively in the above mentioned order.

7. Method according to any of claims 1 to 5, wherein the method comprises the following steps:
a. the user being connected to the server (S) from the personal computer (PC), the server (S) requests a mobile phone number and a session password from the user,
b. the user types a session password of his choice into the mobile phone (MP),
c. the SIM (SIM) stores the session password typed into the mobile phone (MP),
d. the user types the same session password and his mobile phone number into the personal computer (PC),
e. the personal computer (PC) sends the mobile phone number and the session password to the server (S),
f. the server (S) sends the mobile phone number and the session password to the mobile network server (MNS),
g. the mobile network server (MNS) builds an SMS containing the session password and sends the SMS to the SIM (SIM), the SIM (SIM) being identified by its mobile phone number,
h. the SIM (SIM) receives the SMS,
i. the SIM (SIM) verifies that session password received in the SMS is identical to the one it generated in the first place,
j. the SIM (SIM) uses the SMS deliver report mechanism in order to inform the mobile network server (MNS) of the success or failure of the session password verification.
k. the mobile network server (MNS) informs the server (S) of the successful authentication,
wherein step c occurs after step b, step h occurs after step c, step d occurs after step a, and steps d to k occur consecutively in the above mentioned order.

8. Method according to any previous claim, wherein the mobile network (MN) is a GSM, GPRS or UMTS network.

9. System comprising a SIM (SIM), a mobile phone (MP), a mobile network server (MNS), a server (S) and a personal computer (PC), the system being **characterized in that** it is set to authenticate a user holding the SIM (SIM) to the server (S) according to a method according to any previous claim.
